# FASCICULE DE BREVET EUROPEEN

(11) **EP 3 259 461 B1**
(45) Date de publication et mention de la délivrance du brevet: **06.05.2020**
(21) Numéro de dépôt: 16713954.2
(22) Date de dépôt: 15.02.2016
(51) Int. Cl.: F02C 5/12, F23R 7/00, F02C 5/02, F02K 7/06, F02K 7/02

(54) **SYSTÈME DE COMBUSTION À VOLUME CONSTANT POUR TURBOMACHINE DE MOTEUR D'AÉRONEF**
VERBRENNUNGSSYSTEM MIT KONSTANTEM VOLUMEN FÜR EINEN GASTURBINENMOTOR EINES FLUGZEUGMOTORS
CONSTANT-VOLUME COMBUSTION SYSTEM FOR A TURBINE ENGINE OF AN AIRCRAFT ENGINE

(30) Priorité: 17.02.2015 FR 1551301
(43) Date de publication de la demande: 27.12.2017
(73) Titulaire: Safran Helicopter Engines, 64510 Bordes (FR)
(72) Inventeur: TALIERCIO, Guillaume, 77550 Moissy Cramayel Cedex (FR); VIGUIER, Christophe, Nicolas, Henri, 77550 Moissy Cramayel Cedex (FR)
(74) Mandataire: Brevalex
(86) Numéro de dépôt international: PCT/FR2016/050337
(87) Numéro de publication internationale: WO 2016/132055

(56) Documents cités:
- DE-C- 387 166
- FR-A- 346 883
- GB-A- 2 035 459
- US-A- 2 579 321
- US-A- 5 615 548
- US-B1- 6 983 604

## Description

### DOMAINE TECHNIQUE

L'invention concerne un système de combustion à volume constant, aussi désigné par l'acronyme CVC, ou par l'expression combustion selon le cycle de Humphrey, ce système étant destiné à équiper une turbomachine de moteur d'aéronef.

### ÉTAT DE LA TECHNIQUE ANTÉRIEURE

La chambre de combustion de la majorité des moteurs d'aéronef actuels, de type turboréacteur, fonctionne selon le cycle de Brayton qui est un cycle de combustion continue à pression constante.

Il est pourtant connu que le remplacement d'un système de combustion à pression constante par un système de combustion à volume constant, c'est-à-dire mettant en œuvre le cycle de Humphrey, devrait apporter un gain de consommation spécifique pouvant atteindre vingt pourcents.

D'une manière générale, le cycle de Humphrey impose de conserver la charge dans un volume physiquement clos pendant une certaine partie du cycle, et il induit la mise en œuvre d'un régime de fonctionnement de type pulsé.

En pratique, un moteur d'aéronef à combustion à volume constant comporte un compresseur, un conduit d'échappement et une chambre de combustion reliée au compresseur et au conduit, par des valves respectivement d'injection et d'éjection.

Chaque cycle de combustion à volume constant comporte une phase d'admission et d'établissement dans la chambre de combustion d'un mélange d'air comprimé et de carburant, une phase d'allumage par un système commandé et de combustion du mélange, et une phase de détente et d'éjection du gaz de combustion.

Des valves sont commandées de manière synchronisée pour mettre en œuvre ces trois phases du cycle de Humprey : elles sont en particulier toutes fermées durant la phase de combustion, après quoi l'ouverture de la ou des vannes d'éjection permet la détente et l'éjection des gaz de combustion.

Dans les systèmes à combustion à volume constant connus, on a jusque-là principalement cherché à réduire l'encombrement général du système, notamment pour l'intégrer dans l'épaisseur de l'aile de l'aéronef.

L'objet de l'invention est au contraire d'apporter une architecture de système de combustion à volume constant qui puisse s'intégrer de manière simple à une architecture de turbomachine actuelle, ayant une forme générale cylindrique et de grand diamètre.

Un système de combustion à volume constant de l'art antérieur est connu du document de brevet français No FR346883, désignant des conduits d'échappement individuels pour chacune des chambres de combustion. Un autre système est divulgué dans le document de brevet américain US6983604, divulguant un conduit d'échappement annulaire autour d'une chambre de combustion unique.

### EXPOSÉ DE L'INVENTION

L'invention a pour objet un système de combustion à volume constant pour turbomachine d'aéronef, ce système comprenant :
- plusieurs chambres de combustion régulièrement réparties autour d'un axe longitudinal ;
- un collecteur d'air compressé s'étendant autour de l'axe longitudinal et comprenant une sortie d'air compressé orientée radialement pour alimenter chaque chambre de combustion en air compressé provenant d'un compresseur de la turbomachine ;
- un conduit d'échappement s'étendant autour de l'axe longitudinal et comprenant une entrée orientée radialement pour recevoir les gaz de combustion issus des chambres de combustion ainsi qu'une sortie orientée axialement, les chambres de combustion étant interposées radialement entre la sortie du collecteur et l'entrée du conduit d'échappement ;
- des moyens de cadencement de l'admission dans chaque chambre de combustion d'air compressé issu de la sortie du collecteur et de l'éjection hors de chaque chambre de combustion de gaz de combustion vers le conduit d'échappement.

Avec cet agencement, le système de combustion s'étend radialement sur une longueur faible selon l'axe longitudinal, ce qui facilite son intégration à une turbomachine actuelle, où il peut être installé à la place d'une chambre de combustion continue, à savoir entre les étages de compression et les étages de turbine.

L'invention concerne également un système de combustion ainsi défini, comprenant un corps de combustion portant les chambres de combustion ce corps de combustion comportant au niveau de chaque chambre de combustion une ouverture d'admission d'air compressé orientée radialement, et une ouverture d'échappement de gaz de combustion orientée radialement, et un distributeur rotatif avec des moyens d'entraînement en rotation de ce distributeur rotatif, ce distributeur rotatif comportant :
- une couronne d'admission coaxiale à l'axe longitudinal et pourvue de lumières d'admission, cette couronne d'admission étant interposée radialement entre la sortie du collecteur et le corps de combustion ;
- une couronne d'échappement coaxiale à l'axe longitudinal et pourvue de lumières d'échappement, cette couronne d'échappement étant interposée radialement entre l'entrée du conduit d'échappement et le corps de combustion.

L'invention concerne également un système de combustion ainsi défini, dans lequel la sortie du collecteur s'étend autour des chambres de combustion et dans lequel les chambres de combustion sont situées autour de l'entrée du conduit d'échappement.

L'invention concerne également un système de combustion ainsi défini, dans lequel l'entrée du conduit d'échappement s'étend autour des chambres de combustion, et dans lequel les chambres de combustion sont situées autour de la sortie du collecteur.

L'invention concerne également un système de combustion ainsi défini, dans lequel chaque chambre de combustion comporte une lumière d'admission et une lumière d'échappement, et dans lequel chaque chambre de combustion est montée rotative autour d'un axe qui lui est central pour pouvoir tourner sur elle-même, des moyens d'entraînement en rotation des chambres de combustion, chaque lumière d'admission permettant l'admission d'air comprimé dans la chambre lorsque cette lumière est en regard de la sortie du collecteur d'air comprimé, chaque lumière d'échappement permettant l'échappement de gaz de combustion hors de la chambre de combustion lorsque cette lumière d'échappement est en regard de l'entrée du conduit d'échappement.

L'invention concerne également un système de combustion ainsi défini, dans lequel les moyens d'entraînement en rotation de chaque chambre de combustion comprennent une roue dentée entraînée en rotation autour de l'axe longitudinal et pour chaque chambre de combustion un pignon engrené dans cette roue dentée en étant écarté radialement de l'axe longitudinal, chaque pignon étant couplé rigidement à une chambre de combustion correspondante.

L'invention concerne également une turbomachine comprenant un système de combustion à volume constant ainsi défini.

L'invention concerne également un moteur d'aéronef de type turboréacteur comprenant une turbomachine ainsi définie.

### BRÈVE DESCRIPTION DES DESSINS

La figure 1 est une vue schématique en coupe latérale d'un premier mode de réalisation du système selon l'invention comprenant une chambre de combustion fixe et qui est intégré à un moteur à compresseur centrifuge ;
La figure 2 est une vue en coupe transversale montrant la disposition des chambres de combustion pour le premier ou le second mode de réalisation de l'invention ;
La figure 3 est une vue développée montrant la disposition des lumières d'admission et d'éjection dans le premier mode de réalisation de l'invention ;
La figure 4 est une vue partielle schématique en coupe latérale d'un second mode de réalisation d'un système selon l'invention comprenant aussi une chambre de combustion fixe et qui est intégré à un moteur à compresseur axial ;
La figure 5 est une vue partielle schématique en coupe latérale d'un troisième mode de réalisation de système selon l'invention comprenant une chambre de combustion rotative et qui est intégré à un moteur à compresseur centrifuge.

### EXPOSÉ DÉTAILLÉ DE MODES DE RÉALISATION PARTICULIERS

D'une manière générale, l'invention s'applique à une turbomachine comprenant un compresseur pouvant être centrifuge ou bien axial, et une turbine pouvant être centripète ou bien axiale.

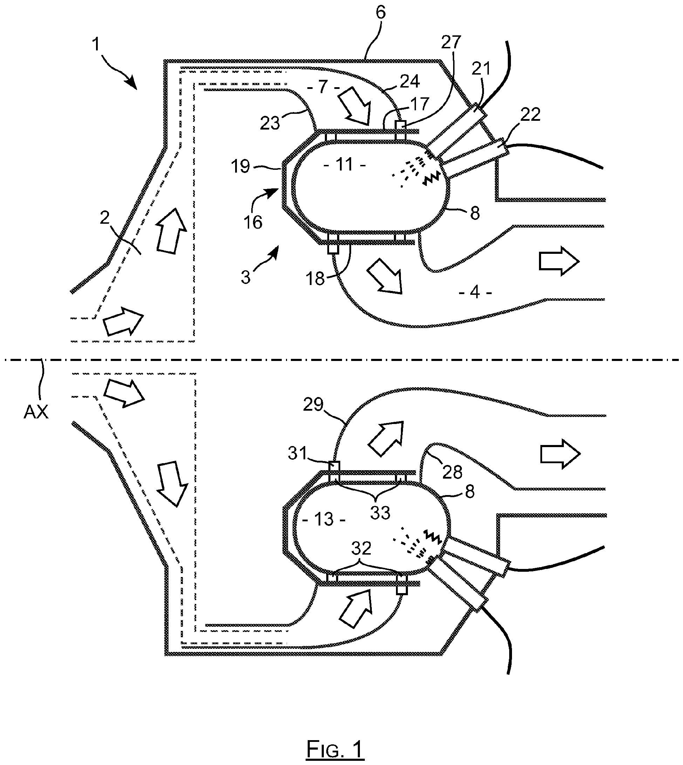

Sur la figure 1, un moteur 1 équipé du système de combustion à volume constant selon l'invention a une structure générale de révolution autour d'un axe principal AX qui correspond à son axe longitudinal.

Ce moteur comporte en amont un compresseur 2 qui est ici un compresseur centrifuge, pour alimenter un système de combustion à volume constant généralement désigné par la référence 3, éjectant des gaz de combustion en entrée d'un conduit d'échappement 4 qui est situé en aval de ce système de combustion.

Le compresseur 2, le système de combustion 3 et le conduit d'échappement 4 ont eux-mêmes des structures de révolution tout en étant situés les uns derrière les autres le long de l'axe AX, l'ensemble étant entouré par un carter de révolution 6 représenté de manière symbolique.

Le compresseur centrifuge 2 est alimenté par de l'air provenant de l'amont du moteur et qui est acheminé parallèlement à l'axe longitudinal. Lorsque cet air a traversé le compresseur centrifuge, il est éjecté radialement selon une direction centrifuge, c'est-à-dire en s'éloignant de l'axe AX, pour être reçu en entrée d'un collecteur 7 dans lequel il chemine d'abord longitudinalement vers l'aval du moteur. En continuant son cheminement dans ce collecteur 7, l'air est ensuite dirigé radialement selon une direction centripète, c'est-à-dire vers l'axe AX, pour sortir du collecteur 7 afin d'entrer dans le système de combustion proprement dit 3.

Après avoir été brulés dans le système de combustion à volume constant 3, les gaz de combustion sont éjectés de ce système 3 radialement selon une direction centripète en étant admis en entrée du conduit d'échappement 4. Durant leur cheminement dans ce conduit d'échappement, les gaz sont redressés pour se détendre parallèlement à l'axe AX. Cette détente peut, selon l'architecture retenue, être utilisée pour générer directement une poussée, ou bien pour entraîner une turbine non représentée qui située en aval du conduit d'échappement 4.

Comme visible dans la figure 1, le système de combustion 3 proprement dit a une structure générale torique. Ce système est entouré par la sortie du collecteur 7, et il entoure l'entrée du conduit d'échappement 4, tout en étant situé le long de l'axe AX au même niveau que la sortie du collecteur 7 et que l'entrée du conduit d'échappement 4.

Ce système de combustion 3 comporte un corps de combustion fixe 8 ayant ici quatre chambres de combustion 11-14 régulièrement espacées les unes des autres autour de l'axe AX.

Chaque chambre de combustion 11-14 est une enceinte fermée délimitée par une ou plusieurs parois, mais comportant une ouverture d'admission 11a-14a au niveau de sa face périphérie externe, et une ouverture d'éjection 11e-14e au niveau de sa face périphérique interne.

Les ouvertures d'admission 11a-14a permettent d'admettre dans les chambres 11-14 l'air compressé issu de la sortie du collecteur 7, alors que les ouvertures d'éjection permettent d'évacuer les gaz de combustion vers l'entrée du conduit d'échappement. Ces admissions et éjections se déroulent de manière indépendante et coordonnée pour chacune des chambres 11a-14a du corps de combustion.

Les admissions et éjections de gaz sont assurées et synchronisées par un distributeur rotatif 16 qui comprend une couronne d'admission 17 entourant le corps de combustion 8 en longeant sa face externe, et une couronne d'éjection 18 longeant la face interne du corps de combustion 8 en étant entourée par celui-ci.

La couronne d'admission 17 et la couronne d'éjection 18 ont chacune une forme de tronc de cylindre, centré sur l'axe AX, et elles sont réunies par un fond 19 du distributeur 16. Ce distributeur rotatif 16 a ainsi une forme générale de rigole torique à section en U qui recouvre les faces amont, interne et externe du corps de combustion 8.

La couronne d'admission 17 entoure le corps de combustion 8 en étant interposée entre ce corps de combustion 8 et la sortie du collecteur 7. De manière analogue, la couronne d'éjection 18 est entourée par le corps de combustion 8 en étant interposée entre ce corps et l'entrée du conduit d'échappement 4.

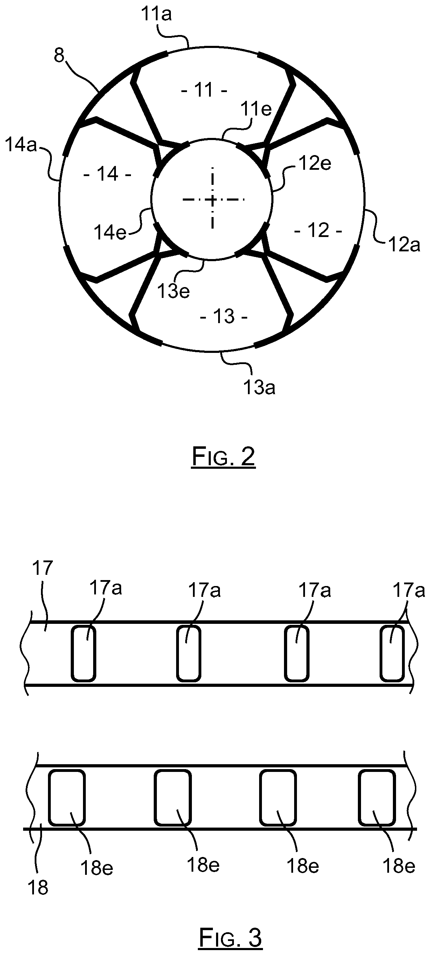

Comme visible sur la figure 3, la paroi d'admission 17 comporte une série de quatre ouvertures ou lumières d'admission repérées par 17a, régulièrement réparties le long de cette paroi d'admission, c'est-à-dire régulièrement réparties autour de l'axe AX.

De la même manière, la paroi d'éjection 18 comporte quatre ouvertures ou lumières d'éjection 18e régulièrement réparties le long de cette paroi, c'est-à-dire autour de l'axe de révolution AX.

En fonctionnement, le distributeur 16 est entraîné en rotation autour de l'axe AX, pour séquencer les admissions et les éjections de gaz pour les différentes chambres.

Plus particulièrement, lorsqu'une lumière 17a du distributeur 16 est en vis-à-vis, au moins partiellement, de l'ouverture d'admission 11a de la fenêtre 11, l'air comprimé issu du compresseur est admis dans la chambre 11 via la sortie du collecteur 7.

Le distributeur 16 continuant sa rotation, la lumière 17a s'écarte de l'ouverture d'admission 11a jusqu'à ce que celle-ci soit fermée. Dans cette situation, l'ouverture d'éjection 11e est également fermée par la paroi d'éjection 18, de sorte que du carburant peut être injecté dans la chambre 11 par un injecteur 21 visible sur la figure 1. Après injection du carburant, la combustion dans la chambre fermée est déclenchée par une bougie 22, ou tout autre système d'allumage commandé.

Le distributeur 16 continuant de tourner, autour de l'axe AX, une lumière d'éjection 18e arrive en vis-à-vis de l'ouverture d'éjection 11e de la chambre 11, ce qui permet l'éjection des gaz de combustion dans le conduit d'échappement 4 via son entrée, pour produire une poussée ou bien pour alimenter une turbine.

Le distributeur 16 continuant sa rotation, une nouvelle fenêtre 17a arrive en coïncidence avec l'ouverture d'admission 11a, ce qui permet de commencer une nouvelle admission d'air comprimé.

Il est à noter que durant le début de l'admission d'air comprimé, l'éjection des gaz est encore ouverte car il existe une portion de recouvrement durant laquelle les lumières d'admission et d'éjection sont ouvertes simultanément. Ce recouvrement permet de chasser les gaz de combustion.

Par ailleurs, le cycle qui vient d'être décrit pour la chambre de combustion 11 se produit de la même manière pour les autres chambres, c'est-à-dire les chambres 12-14.

Comme visible dans la figure 1, le collecteur 7 est délimité par deux parois de révolution, à savoir une paroi interne 23 et une paroi externe 24, l'espace interne de ce collecteur ayant ainsi une forme généralement torique centrée sur l'axe AX. La paroi interne 23 peut être fixe, ou bien être rigidement solidaire du distributeur rotatif 16 pour tourner avec celui-ci, comme c'est le cas dans l'exemple de la figure 1.

La paroi externe 24 est ici fixe en étant par exemple rigidement solidarisée au carter 6. Elle comporte un bord périphérique interne, situé en vis-à-vis de la couronne d'alimentation du distributeur 16 qui est au contraire rotative. Un moyen circulaire d'étanchéité 27 est interposé entre le bord interne de la paroi externe 24 et la face externe de la paroi d'alimentation 17 afin d'assurer une étanchéité satisfaisante au niveau de cette jonction, lorsque le distributeur 16 tourne par rapport au bord interne de la paroi externe 24, c'est-à-dire lorsque le moteur est en service.

Le conduit d'échappement 4 est lui aussi délimité par une paroi externe de révolution 28 et par une paroi interne de révolution 29, ce conduit 4 ayant lui aussi une architecture torique autour de l'axe longitudinal AX.

La paroi interne 29 est ici fixe. Elle comporte un bord périphérique externe qui est situé en vis-à-vis de la couronne d'éjection 18 qu'il longe. Un moyen d'étanchéité 31 est interposé entre ce bord externe et la face interne de la couronne d'éjection 18 pour assurer une étanchéité satisfaisante de la jonction de ces deux éléments lorsque le distributeur rotatif tourne, c'est-à-dire lorsque le moteur est en service.

La paroi externe 28 qui est elle aussi fixe comporte un bord périphérique externe qui est rigidement solidarisé à une portion intérieure du corps de combustion 8 qui est lui aussi fixe.

L'étanchéité du distributeur rotatif avec le corps de combustion est également optimisée par quatre moyens d'étanchéité circulaires.

Deux moyens circulaires d'étanchéité 32 sont interposés entre la face interne de la couronne d'admission 17 qui est rotative et la face externe du corps de combustion 8 qui est fixe, en étant disposés de part et d'autre des lumières d'admission 17a et des ouvertures d'admission 11a-14a le long de l'axe longitudinal AX. Ces deux moyens visent à limiter, voire annuler, la quantité d'air admis par une lumière d'admission 17a qui fuite avant d'atteindre l'ouverture d'admission correspondante.

De manière analogue, deux autres moyens circulaires d'étanchéité 33 sont aussi interposés entre la face externe de la couronne d'éjection 18 qui est rotative et la face interne du corps de combustion 8 qui est fixe, en étant disposées de part et d'autre des lumières d'éjection 18e et des ouvertures d'éjection 11e-14e le long de l'axe longitudinal AX.

Selon l'invention, le flux d'air comprimé et de gaz de combustion traversant les chambres de combustion se déplace radialement, c'est-à-dire perpendiculairement à l'axe AX.

Dans l'exemple de la figure 1, ce flux est centripète, c'est-à-dire qu'il se dirige vers l'axe, ce qui est approprié pour une architecture à compresseur centrifuge, c'est-à-dire délivrant un flux radial d'air comprimé à distance de l'axe, ce flux pouvant ainsi être dévié pour être redirigé vers l'axe pour sa combustion.

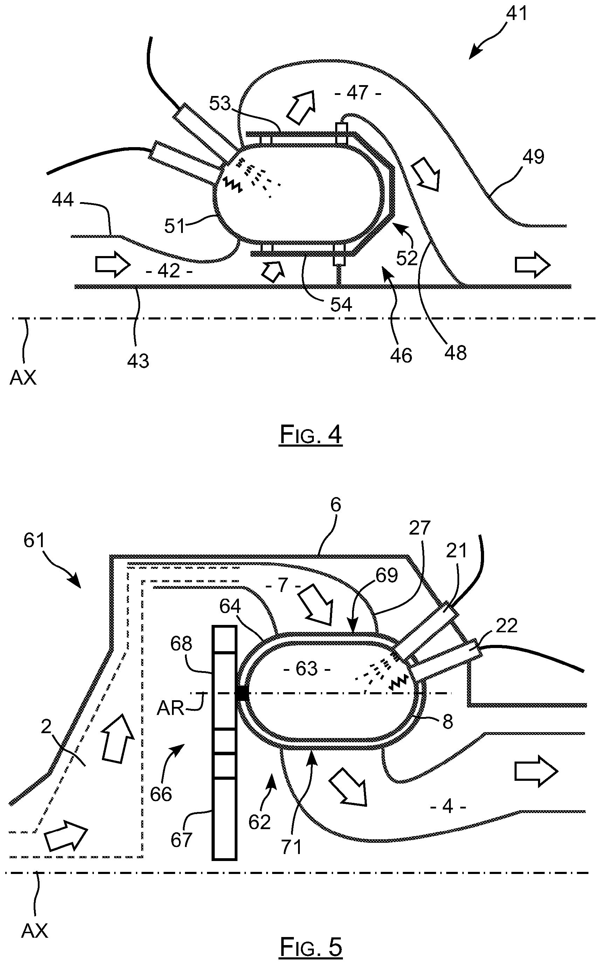

L'invention s'applique aussi à une architecture de moteur à compresseur axial, comme dans l'exemple de la figure 4, dans laquelle le flux traverse les chambres de combustion en étant orienté de façon centrifuge, contrairement au cas de la figure 1.

Dans l'exemple de la figure 4, le moteur, repéré par 41 comporte un compresseur axial, non représenté, qui délivre de l'air compressé dans un collecteur axial 42 délimité par une paroi interne cylindrique 43 et une paroi externe de révolution 44 qui sont toutes les deux fixes.

L'air compressé chemine d'abord longitudinalement dans ce collecteur 42 pour y être ensuite dévié radialement afin de sortir de ce collecteur en suivant une direction radiale centrifuge, de manière à entrer dans le système de combustion à volume constant 46 qui entoure la sortie de ce collecteur 42.

Les gaz de combustion sont ensuite éjectés radialement du système 46 selon une direction centripète pour arriver en entrée d'un conduit d'échappement 47 qui est lui aussi délimité par une paroi interne de révolution 48 et par une paroi externe de révolution 49. Ce conduit d'échappement a une forme torique dont l'entrée entoure le système de combustion 46, et sa paroi interne ainsi que sa paroi externe sont l'une et l'autre fixes.

La trajectoire des gaz de combustion qui sont admis radialement dans ce conduit d'échappement 47 est redressée pour les faire cheminer longitudinalement, afin que ces gaz se détendent selon la direction AX de manière à pouvoir alimenter une turbine non représentée ou à générer directement de la poussée orientée longitudinalement.

Le système de combustion à volume constant 46 est tout à fait analogue au système de combustion 3 de l'exemple des figures 1 et 3. Il comporte un corps de combustion 51 qui est identique au corps de combustion 8, et qui comprend plusieurs chambres de combustion régulièrement réparties autour de l'axe AX.

L'admission et l'éjection des gaz est là aussi synchronisée par un distributeur rotatif 52 qui est analogue au distributeur 16 de l'exemple de la figure 1, ce distributeur ayant lui aussi une forme de rigole torique à section en U qui couvre partiellement le corps de combustion.

Mais le distributeur 52 est ici orienté vers l'amont, par opposition à celui de la figure 1, c'est-à-dire qu'il couvre la face aval du corps de combustion, ainsi que les faces périphériques externe et interne de ce corps.

Ce distributeur rotatif 52 comporte lui aussi une couronne externe, repérée par 53 ainsi qu'une couronne interne repérée par 54 qui est elle aussi cylindrique. Ainsi, la structure générale du distributeur 52 est identique à celle du distributeur 16, mais c'est sa couronne interne 54 qui est équipée de lumières d'admission pour constituer la couronne d'admission, et c'est sa couronne externe 53 qui est pourvue de lumières d'éjection pour constituer la couronne d'échappement.

De manière analogue, les ouvertures d'admission sont situées au niveau de la paroi cylindrique interne du corps de combustion 51, et les ouvertures d'éjection sont formées au niveau de la paroi externe de ce corps de combustion 51.

Le fonctionnement de cet autre moteur 41 est analogue à celui du moteur 1 : les admissions et échappements étant synchronisés là aussi par un distributeur rotatif circulaire qui entoure le corps de combustion, mais les gaz admis et éjectés suivent ici une trajectoire qui est centrifuge au lieu d'être centripète.

L'étanchéité du distributeur rotatif 52 avec le corps de combustion 51 est là aussi optimisée par quatre moyens d'étanchéité circulaires.

Deux moyens circulaires d'étanchéité sont interposés entre la face externe de la couronne d'admission rotative et la face interne du corps de combustion fixe, en étant disposés de part et d'autre des lumières et ouvertures d'admission le long de l'axe AX. Ces deux moyens visent à limiter, voire annuler, la quantité d'air admis par une lumière d'admission qui fuite avant d'atteindre l'ouverture d'admission correspondante.

De manière analogue, deux autres moyens circulaires d'étanchéité sont interposés entre la face interne de la couronne d'éjection rotative et la face externe du corps de combustion fixe, en étant disposées le long de l'axe AX de part et d'autre des lumières et ouvertures d'éjection.

Complémentairement, un moyen circulaire d'étanchéité est interposé entre le bord externe de la paroi interne 43 du collecteur 42 et la face interne de la couronne d'alimentation afin d'assurer une étanchéité satisfaisante pour cette jonction, lorsque le distributeur tourne.

Un autre moyen circulaire d'étanchéité est interposé entre le bord interne de la paroi interne 48 du conduit d'échappement 47 et la face externe de la couronne d'éjection pour assurer une étanchéité de la jonction de ces deux éléments lorsque le distributeur rotatif tourne.

Dans le mode de réalisation des figures 1 à 4, le corps de combustion est fixe, et c'est un distributeur rotatif qui synchronise les admissions et échappements pour chaque chambre de combustion, ces admissions et échappements se déroulant suivant des trajectoires orientées radialement.

Mais l'invention concerne également une architecture dans laquelle chaque chambre de combustion est prévue rotative et entraînée en rotation pour synchroniser les admissions d'air et les échappements de gaz de combustion.

C'est le cas dans l'exemple de la figure 5 où cette solution est appliquée à un moteur 61 pourvu d'un compresseur qui est centrifuge, ce moteur 61 ayant ainsi une structure générale identique à celle du moteur de la figure 1.

Ce moteur qui apparaît dans la figure 5 comprend tout comme celui de la figure 1, un compresseur centrifuge 2 à son amont pour alimenter un système de combustion à volume constant 62 qui éjecte des gaz de combustion en entrée d'un conduit d'échappement aval 4.

Le compresseur 2, le système de combustion 62 et le conduit d'échappement 4 ont eux-mêmes des structures de révolution tout en étant distribués les uns derrière les autres le long de l'axe AX, l'ensemble étant entouré par un carter 6.

Le compresseur 2 délivre de l'air qu'il éjecte radialement selon une direction centrifuge, celui-ci étant reçu en entrée du collecteur 7 dans lequel il chemine d'abord longitudinalement vers l'aval avant d'être redressé radialement selon une direction centripète en sortie du collecteur 7 pour entrer dans le système 62.

Après avoir été brulé dans le système 62, les gaz sont éjectés radialement selon une direction centripète pour être admis en entrée du conduit d'échappement 4 dans lequel ils sont ensuite redressés pour se détendre parallèlement à l'axe AX.

Le système de combustion 62 loge dans une structure générale torique qui est entourée par la sortie du collecteur 7 et qui entoure l'entrée du conduit d'échappement 4, tout en étant situé le long de l'axe AX au même niveau que la sortie du collecteur 7 et que l'entrée le conduit 4.

Le système de combustion à volume constant comporte là aussi plusieurs chambres de combustion distinctes, par exemple quatre, qui sont réparties régulièrement autour de l'axe AX, l'une de ces chambres apparaissant dans la figure en y étant repérée par 63.

Cette chambre de combustion 63 est entourée par une chemise externe fixe 64 dans laquelle elle est montée rotative de manière à pouvoir pivoter autour d'un axe de rotation AR longitudinal qui est radialement espacé de l'axe AX.

Le moteur est encore équipé de moyens d'entraînement en rotation de chaque enveloppe interne de chambre de combustion. Ces moyens d'entraînement sont ici un train d'engrenage 66 comprenant par exemple une roue principale 67 de grand diamètre centrée sur l'axe AX, et pour chaque chambre de combustion un pignon 68 entraîné par cette roue principale et entraînant lui-même la chambre de combustion à laquelle il est accouplé en étant par exemple rigidement solidarisé à celle-ci.

La chemise fixe 64 comporte une ouverture d'admission 69 qui est située au niveau de la région de cette chemise qui est la plus éloignée de l'axe de révolution AX, cette ouverture étant ainsi en vis-à-vis de la sortie du collecteur 7. De manière analogue, cette chemise fixe 64 comporte également une ouverture d'éjection 71 qui est au contraire située au niveau de sa région la plus proche de l'axe AX, pour déboucher directement dans l'entrée du conduit d'échappement 4. Les ouvertures d'admission et d'échappement sont avantageusement espacées l'une de l'autre le long de l'axe AX.

Complémentairement, la chambre de combustion rotative 63 comporte une lumière d'admission et une lumière d'échappement, situées respectivement le long de l'axe AX, à hauteur de l'ouverture d'admission 69, et de l'ouverture d'éjection 71. Ces lumières peuvent être espacées l'une de l'autre autour de l'axe AR de façon à optimiser le cadencement des admissions d'air compressé et l'éjection des gaz de combustion.

Ainsi, durant la rotation de la chambre de combustion 63 autour de son axe AR, lorsque la lumière d'admission est en vis-à-vis de l'ouverture 69, de l'air compressé est admis dans la chambre, en provenance de la sortie du collecteur 7. Lorsque la lumière d'admission n'est plus en vis-à-vis de l'ouverture 69, la chambre 63 est complètement fermée, ce qui permet d'injecter le carburant et de provoquer la combustion par un allumage commandé, mettant par exemple en œuvre une bougie.

Ensuite, le mouvement de rotation de la chambre 63 conduit à une situation dans laquelle la lumière d'éjection se trouve en vis-à-vis de l'ouverture d'échappement 71, ce qui permet aux gaz de combustion d'être éjectés dans l'entrée du conduit d'échappement 4 pour être détendus afin d'entraîner une turbine ou bien de générer une poussée.

Les lumières d'admission et d'échappement peuvent être situées au même niveau autour de l'axe AR en étant espacées l'une de l'autre le long de cet axe, de sorte que lorsque la lumière d'admission est en vis-à-vis de l'ouverture 69, la lumière d'échappement est obturée par le reste de la chemise. De la même manière, lorsque la lumière d'échappement est en vis-à-vis de l'ouverture 71, la lumière d'admission est obturée par le reste de la chemise dans cette région. Dans ce cas, les ouvertures d'admission et d'échappement sont alors elles aussi espacées l'une de l'autre le long de l'axe AX d'une valeur appropriée.

Comme on l'aura compris, les autres chambres de combustion ont le même fonctionnement que la chambre 63, ce qui permet à ces différentes chambres de délivrer des gaz de combustion en entrée de du conduit d'échappement 4.

Dans l'exemple qui a été décrit, l'invention est appliquée à une turbomachine de moteur d'aéronef, mais l'invention s'applique aussi bien à une turbomachine faisant partie d'un équipement différent, comme notamment un équipement terrestre de production d'énergie électrique ou autre.

## Revendications

1. Système de combustion à volume constant (3 ; 46 ; 62) pour turbomachine, ce système comprenant :
- plusieurs chambres de combustion (11-14) régulièrement réparties autour d'un axe longitudinal (AX) ;
- un collecteur (7 ; 42) d'air compressé comprenant une sortie d'air compressé orientée radialement pour alimenter chaque chambre de combustion en air compressé provenant d'un compresseur de la turbomachine ;
- un conduit d'échappement (4 ; 47) comprenant une entrée orientée radialement pour recevoir les gaz de combustion issus des chambres de combustion (11-14) ainsi qu'une sortie orientée axialement, les chambres de combustion (11-14) étant interposées radialement entre la sortie du collecteur (7 ; 42) et l'entrée du conduit d'échappement (4 ; 47) ;
- des moyens de cadencement de l'admission dans chaque chambre de combustion (11-14) d'air compressé issu de la sortie du collecteur (7 ; 42) et de l'éjection hors de chaque chambre de combustion (11-14) de gaz de combustion vers le conduit d'échappement (4; 47),
caractérisé en ce-que
le collecteur (7; 42) d'air compressé et le conduit d'échappement (4; 47) s'étendent autour de l'axe longitudinal (AX).

2. Système selon la revendication 1 comprenant un corps de combustion (8 ; 51) portant les chambres de combustion (11-14) ce corps de combustion comportant au niveau de chaque chambre de combustion (11-14) une ouverture (11a-14a) d'admission d'air compressé orientée radialement, et une ouverture d'échappement (11e-14e) de gaz de combustion orientée radialement, et un distributeur rotatif (16 ; 52) avec des moyens d'entraînement en rotation de ce distributeur rotatif (16 ; 52), ce distributeur rotatif (16 ; 52) comportant :
- une couronne d'admission (17) coaxiale à l'axe longitudinal (AX) et pourvue de lumières d'admission (17a), cette couronne d'admission (17) étant interposée radialement entre la sortie du collecteur (7 ; 42) et le corps de combustion (8 ; 51) ;
- une couronne d'échappement (18) coaxiale à l'axe longitudinal (AX) et pourvue de lumières d'échappement (18e), cette couronne d'échappement étant interposée radialement entre l'entrée du conduit d'échappement (4) et le corps de combustion (8 ; 51).

3. Système selon la revendication 1 ou 2, dans lequel la sortie du collecteur (7) s'étend autour des chambres de combustion (11-14) et dans lequel les chambres de combustion (11-14) sont situées autour de l'entrée du conduit d'échappement (4).

4. Système selon la revendication 1 ou 2, dans lequel l'entrée du conduit d'échappement (47) s'étend autour des chambres de combustion (11-14), et dans lequel les chambres de combustion (11-14) sont situées autour de la sortie du collecteur (42).

5. Système selon la revendication 1, dans lequel chaque chambre de combustion (63) comporte une lumière d'admission et une lumière d'échappement, et dans lequel chaque chambre de combustion (63) est montée rotative autour d'un axe (AR) qui lui est central pour pouvoir tourner sur elle-même, des moyens (66) d'entraînement en rotation des chambres de combustion (63), chaque lumière d'admission permettant l'admission d'air comprimé dans la chambre (63) lorsque cette lumière est en regard de la sortie du collecteur d'air comprimé (7), chaque lumière d'échappement permettant l'échappement de gaz de combustion hors de la chambre de combustion (63) lorsque cette lumière d'échappement est en regard de l'entrée du conduit d'échappement (4).

6. Système selon la revendication 5, dans lequel les moyens d'entraînement en rotation de chaque chambre de combustion comprennent une roue dentée (67) entraînée en rotation autour de l'axe longitudinal (AX) et pour chaque chambre de combustion (63) un pignon (68) engrené dans cette roue dentée en étant écarté radialement de l'axe longitudinal (AX), chaque pignon étant couplé rigidement à une chambre de combustion (63) correspondante.

7. Turbomachine comprenant un système de combustion à volume constant selon l'une des revendications précédentes.

8. Moteur d'aéronef comprenant une turbomachine selon la revendication 7.

## Patentansprüche

1. Verbrennungssystem mit konstantem Volumen (3; 46; 62) für einen Gasturbinenmotor, wobei dieses System Folgendes umfasst:
- mehrere, gleichmäßig um eine Längsachse (AX) herum angeordnete Brennkammern (11-14);
- eine Sammelleitung (7; 42) für Druckluft, die einen radial ausgerichteten Druckluftauslass für die Versorgung der einzelnen Brennkammern mit Druckluft von einem Verdichter des Gasturbinenmotors umfasst;
- eine Abgasleitung (4; 47), die einen radial ausgerichteten Einlass für die Aufnahme der Abgase aus den Brennkammern (11-14) sowie einen axial ausgerichteten Auslass umfasst, wobei die Brennkammern (11-14) radial zwischen dem Auslass der Sammelleitung (7; 42) und dem Einlass der Abgasleitung (4; 47) angeordnet sind;
- Mittel zur Taktung des Einströmens von Druckluft aus dem Auslass der Sammelleitung (7; 42) in die einzelnen Brennkammern (11-14) sowie des Ausstoßens der Abgase aus den einzelnen Brennkammern (11-14) in Richtung der Abgasleitung (4; 47), **dadurch gekennzeichnet, dass** sich die Sammelleitung (7; 42) für Druckluft und die Abgasleitung (4; 47) um die Längsachse (AX) herum erstrecken.

2. System gemäß Anspruch 1, das einen Brennkörper (8; 51) umfasst, der die Brennkammern (11-14) hält, wobei dieser Brennkörper auf Höhe jeder Brennkammer (11-14) über eine radial ausgerichtete Öffnung (11a-14a) für das Einströmen von Druckluft, über eine radial ausgerichtete Abgasöffnung (11e-14e) für Abgase und über einen Umlaufdiffusor (16; 52) mit Mitteln zur Versetzung dieses Umlaufdiffusors (16; 52) in Rotation verfügt, wobei dieser Umlaufdiffusor (16; 52) Folgendes umfasst:
- einen koaxial zur Längsachse (AX) angeordneten Einströmkranz (17) mit Einströmschlitzen (17a), wobei dieser Einströmkranz (17) radial zwischen dem Auslass der Sammelleitung (7; 42) und dem Brennkörper (8; 51) angeordnet ist;
- einen koaxial zur Längsachse (AX) angeordneten Ausströmkranz (18) mit Ausströmschlitzen (18e), wobei dieser Ausströmkranz radial zwischen dem Einlass der Abgasleitung (4) und dem Brennkörper (8; 51) angeordnet ist.

3. System gemäß Anspruch 1 oder 2, bei dem sich der Auslass der Sammelleitung (7) um die Brennkammern (11-14) herum erstreckt und bei dem die Brennkammern (11-14) um den Einlass der Abgasleitung (4) herum angeordnet sind.

4. System gemäß Anspruch 1 oder 2, bei dem sich der Einlass der Abgasleitung (47) um die Brennkammern (11-14) herum erstreckt und bei dem die Brennkammern (11-14) um den Auslass der Sammelleitung (42) herum angeordnet sind.

5. System gemäß Anspruch 1, bei dem jede Brennkammer (63) einen Einströmschlitz und einen Ausströmschlitz umfasst und bei dem jede Brennkammer (63) rotierend um eine zentral zu ihr angeordnete Achse (AR) montiert ist, damit sie um ihre eigene Achse rotieren kann, sowie Mittel (66) zur Versetzung der Brennkammern (63) in Rotation, wobei jeder Einströmschlitz das Einströmen von Druckluft in die Kammer (63) ermöglicht, wenn sich dieser Schlitz gegenüber von dem Auslass der Druckluftsammelleitung (7) befindet, und wobei jeder Ausströmschlitz das Ausströmen von Rauchgas aus der Brennkammer (63) ermöglicht, wenn sich dieser Ausströmschlitz gegenüber von dem Einlass der Abgasleitung (4) befindet.

6. System gemäß Anspruch 5, bei dem die Mittel zur Versetzung der einzelnen Brennkammern in Rotation ein Zahnrad (67) umfassen, das in Rotation um die Längsachse (AX) herum versetzt wird, sowie für jede Brennkammer (63) ein Ritzel (68), das in dieses Zahnrad greift und radial auf der der Längsachse (AX) abgewandten Seite angeordnet ist, wobei jedes Ritzel fest mit einer zugehörigen Brennkammer (63) verbunden ist.

7. Gasturbinenmotor, der ein Verbrennungssystem mit 5 konstantem Volumen gemäß einem der vorstehenden Ansprüche umfasst.

8. Flugzeugmotor, der einen Gasturbinenmotor gemäß Anspruch 7 umfasst.

## Claims

1. A constant-volume combustion system (3; 46; 62) for a turbomachine, this system comprising:
- several combustion chambers (11-14) evenly distributed about a longitudinal axis (AX);
- a compressed air manifold (7; 42) comprising a radially oriented compressed air outlet for supplying compressed air, from a compressor of the turbomachine, to each combustion chamber;
- an exhaust pipe (4; 47) comprising a radially oriented inlet to receive the combustion gases from the combustion chambers (11-14) as well as an axially oriented outlet, the combustion chambers (11-14) being radially interposed between the outlet of the manifold (7; 42) and the inlet of the exhaust pipe (4; 47);
- timing means for timing the intake into each combustion chamber (11-14) of compressed air from the outlet of the manifold (7; 42) and the ejection out of each combustion chamber (11-14) of combustion gases to the exhaust pipe (4; 47) ;
**characterized in that** the compressed air manifold (7; 42) and the exhaust pipe (4; 47) extend about the longitudinal axis (AX).

2. The system according to claim 1 comprising a combustion body (8; 51) carrying the combustion chambers (11-14), this combustion body including at each combustion chamber (11-14), a radially oriented compressed air intake aperture (11a-14a), and a radially oriented combustion gas exhaust aperture (11e-14e), and a rotary feeder (16; 52) with means for rotatably driving this rotary feeder (16; 52), this rotary feeder (16; 52) including:
- an intake ring (17) coaxial with the longitudinal axis (AX) and provided with intake ports (17a), this intake crown (17) being radially interposed between the outlet of the manifold (7; 42) and the combustion body (8; 51);
- an exhaust ring (18) coaxial with the longitudinal axis (AX) and provided with exhaust ports (18e), this exhaust ring being radially interposed between the inlet of the exhaust pipe (4) and the combustion body (8; 51).

3. The system according to claim 1 or 2, wherein the outlet of the manifold (7) extends about the combustion chambers (11-14) and wherein the combustion chambers (11-14) are located about the inlet of the exhaust pipe (4).

4. The system according to claim 1 or 2, wherein the inlet of the exhaust pipe (47) extends about the combustion chambers (11-14), and wherein the combustion chambers (11-14) are located about the outlet of the manifold (42).

5. The system according to claim 1, wherein each combustion chamber (63) includes an intake port and an exhaust port, and wherein each combustion chamber (63) is rotatably mounted about an axis (AR) which is central to the same to be rotatable on itself, means (66) for rotatably driving the combustion chambers (63), each intake port allowing intake of compressed air into the chamber (63) when this port is facing the outlet of the compressed air manifold (7), each exhaust port allowing exhaust of combustion gases out of the combustion chamber (63) when this exhaust port is facing the inlet of the exhaust pipe (4).

6. The system according to claim 5, wherein the means for rotatably driving each combustion chamber comprise a toothed wheel (67) rotatably driven about the longitudinal axis (AX) and for each combustion chamber (63), a pinion (68) meshed with this toothed wheel by being radially spaced apart from the longitudinal axis (AX), each pinion being rigidly coupled to a corresponding combustion chamber (63).

7. A turbomachine comprising a constant-volume combustion system according to one of the preceding claims.

8. An aircraft engine comprising a turbomachine according to claim 7.
